# EUROPEAN PATENT APPLICATION

(11) **EP 4 509 581 A1**
(43) Date of publication of application: **19.02.2025**
(21) Application number: 23788283.2
(22) Date of filing: 07.04.2023
(51) Int. Cl.: C09K 21/12, C08K 5/3462, C08K 5/3492, C08K 9/04, C08L 85/02, C08L 101/00, C08L 63/00, C08K 3/32

(54) **FLAME RETARDANT COMPOSITION, FLAME-RETARDANT RESIN COMPOSITION AND MOLDED ARTICLE**

(30) Priority: 11.04.2022 JP 2022065361
(71) Applicant: ADEKA CORPORATION, Arakawa-ku Tokyo 116-8554 (JP)
(72) Inventor: KASAI Chikako, Tokyo 116-8554 (JP); AOYAMA Etsuko, Tokyo 116-8554 (JP); MATSUKAWA Kazushi, Tokyo 116-8554 (JP); NAKAMURA Michio, Tokyo 116-8554 (JP)
(74) Representative: Gill Jennings & Every LLP
(86) International application number: PCT/JP2023/014398
(87) International publication number: WO 2023/199865

(57) **Abstract**

The present invention provides a flame retardant composition which has an excellent flame retardancy and water resistance, a flame-retardant resin composition, a molded article, and a molded product thereof. The present invention provides a flame retardant composition characterized by containing the following component (A), component (B) and component (C). **In** the flame retardant composition, the component (A) is one or more melamine salts selected from the group consisting of melamine orthophosphate, melamine pyrophosphate and melamine polyphosphate; the component (B) is one or more piperazine salts selected from the group consisting of piperazine orthophosphate, piperazine pyrophosphate and piperazine polyphosphate; and the component (C) is an epoxy compound having a molecular weight or a number average molecular weight of from 300 to 10,000.

## Description

### TECHNICAL FIELD

The present invention relates to a flame retardant composition, a flame-retardant resin composition, a molded article, and a molded product thereof. More specifically, the present invention relates to a flame retardant composition which has an excellent flame retardancy and water resistance, a flame-retardant resin composition and a molded article.

### BACKGROUND ART

Techniques of incorporating phosphate compounds such as ammonium polyphosphate, melamine polyphosphate and piperazine polyphosphate, as flame retardants, to synthetic resins are known, as techniques for imparting flame retardancy to the synthetic resins. However, flame retardants using phosphate compounds are associated with the disadvantage of having an insufficient water resistance while imparting an excellent flame retardancy to synthetic resins. Insufficient water resistance can cause problems such as a decrease in the flame retardancy and the deterioration of external appearance of the resin surface due to the dissolution of flame-retardant components, as a result of contact with moisture or of high humidity conditions. Therefore, application of such flame retardants was limited.

To address these problems, techniques for improving the water resistance of phosphate compounds have been developed, so far. For example, Patent Document 1 proposes a technique of incorporating a phosphate compound and a polycarbodiimide to a thermoplastic resin, and describes an example in which the dissolution amount of components is reduced when the resulting thermoplastic resin composition is brought into contact with hot water.

### RELATED ART DOCUMENT

### PATENT DOCUMENT

[Patent Document 1] JP2009-292965A

### SUMMARY OF THE INVENTION

### PROBLEMS TO BE SOLVED BY THE INVENTION

However, while the technique disclosed in Patent Document 1 has an excellent effect of improving water resistance, the raw material cost of the polycarbodiimide was extremely high as compared to a common resin additive, and the technique was commercially disadvantageous. Therefore, a technique for imparting water resistance to a phosphate compound without using an expensive raw material such as a polycarbodiimide has been desired.

Accordingly, an object of the present invention is to provide a novel flame retardant composition which has an excellent flame retardancy and water resistance, a flame-retardant resin composition, and a molded article.

### MEANS FOR SOLVING THE PROBLEMS

As a result of intensive studies to solve the above-mentioned problems, the present inventors have discovered that the use of a flame retardant composition containing a specific phosphate compound and an epoxy group-containing compound having a specific molecular weight enables to impart water resistance to the phosphate compound, without using an expensive raw material such as a polycarbodiimide, thereby completing the present invention.

Specifically, the flame retardant composition according to the present invention is characterized by containing the following components (A) to (C), wherein:
the component (A) is one or more melamine salts selected from the group consisting of melamine orthophosphate, melamine pyrophosphate and melamine polyphosphate;
the component (B) is one or more piperazine salts selected from the group consisting of piperazine orthophosphate, piperazine pyrophosphate and piperazine polyphosphate; and
the component (C) is an epoxy compound having a molecular weight or a number average molecular weight of from 300 to 10,000.

The flame retardant composition according to the present invention preferably contains from 20 to 50 parts by mass of the component (A), from 50 to 80 parts by mass of the component (B) and from 0.1 to 15 parts by mass of the component (C), with respect to 100 parts by mass of the total amount of the component (A) and the component (B).

In the flame retardant composition according to the present invention, the component (C) is preferably one or more selected from the group consisting of a bifunctional phenol diglycidyl ether, an alicyclic ring-containing multifunctional epoxy compound, and an epoxidized animal or vegetable oil.

In the flame retardant composition according to the present invention, the component (C) preferably has an epoxy equivalent of from 100 to 1,200 g/eq.

In the flame retardant composition according to the present invention, at least one of the component (A) and the component (B) is preferably surface treated with the component (C).

In the flame retardant composition according to the present invention, the component (B) is preferably piperazine pyrophosphate.

The flame retardant composition according to the present invention preferably further contains, as a component (D), from 0.1 to 10 parts by mass of at least one selected from the group consisting of a flame retardant aid and an anti-drip agent, with respect to 100 parts by mass of the total amount of the component (A) and the component (B).

Further, the flame-retardant resin composition according to the present invention is characterized by containing:
a thermoplastic resin; and
from 10 to 400 parts by mass of the above-described flame retardant composition, with respect to 100 parts by mass of the thermoplastic resin.

In addition, the molded article according to the present invention is characterized by using the above-described the flame-retardant resin composition.

### EFFECTS OF THE INVENTION

According to the present invention, it is possible to provide a flame retardant composition which has an excellent flame retardancy and water resistance, a flame-retardant resin composition, and a molded article.

### MODE FOR CARRYING OUT THE INVENTION

The present invention relates to a flame retardant composition, a flame-retardant resin composition, and a molded article. The present invention will be described based on preferred embodiments thereof.

In the present specification, the term "polyphosphoric acid" refers to one or more condensed phosphoric acids having a degree of condensation of 3 or more, or a mixture thereof. The polyphosphoric acid may include one or more of orthophosphoric acid and pyrophosphoric acid. Further, the term "polyphosphate" refers to a salt compound formed by polyphosphoric acid and a base.

In the present specification, the term "phosphoric acids" refers to orthophosphoric acid, pyrophosphoric acid and polyphosphoric acid, or a mixture thereof.

In the present specification, the term "molecular weight" refers to the total sum of atomic weights calculated from the molecular formula. In the case of molecules having a molecular weight distribution, the molecular weight refers to the "number average molecular weight Mn". The number average molecular weight Mn described above is defined to refer to a value in terms of polystyrene as measured using gel permeation chromatography (GPC).

### < Flame Retardant Composition >

First, the flame retardant composition will be described. The melamine salt to be used as the component (A) according to the flame retardant composition of the present invention is a salt of a phosphoric acid and melamine. The melamine salt (A) is selected from the group consisting of melamine orthophosphate, melamine pyrophosphate and melamine polyphosphate, and these salts may be used singly, or in combination of two or more kinds thereof. Among these melamine salts, melamine pyrophosphate or melamine polyphosphate is preferred, and melamine pyrophosphate is more preferred, from the viewpoints of flame retardancy, handleability and preservation stability. **In** cases where the component (A) is a mixture of a plurality of melamine salts, the component (A) preferably contains melamine pyrophosphate, and the higher the content percentage of melamine pyrophosphate, the more preferred.

From the viewpoint of flame retardancy, the ratio of melamine to phosphorus atoms in the melamine salt (A) is preferably such that the amount of melamine is from 0.5 to 2 moles with respect to one mole of phosphorus atoms, and more preferably such that the amount of melamine is from 0.8 to 1.2 moles with respect to one mole of phosphorus atoms.

The melamine salt (A) can be obtained by allowing a phosphoric acid or a corresponding salt of the phosphoric acid, to react with melamine. Further, melamine pyrophosphate and melamine polyphosphate, among the melamine salts (A), can also be obtained by the thermal condensation of melamine orthophosphate.

The piperazine salt to be used as the component (B) according to the flame retardant composition of the present invention is a salt of a phosphoric acid and piperazine. The piperazine salt (B) is selected from the group consisting of piperazine orthophosphate, piperazine pyrophosphate and piperazine polyphosphate, and these salts may be used singly, or in combination of two or more kinds thereof. Among these piperazine salts, piperazine pyrophosphate or piperazine polyphosphate is preferred, and piperazine pyrophosphate is particularly preferred, from the viewpoints of flame retardancy, handleability and preservation stability. In cases where the component (B) is a mixture of a plurality of piperazine salts, the component (B) preferably contains piperazine pyrophosphate, and the higher the content percentage of piperazine pyrophosphate, the more preferred.

From the viewpoint of flame retardancy, the ratio of piperazine to phosphorus atoms in the piperazine salt (B) is preferably such that the amount of piperazine is from 0.5 to 2 moles with respect to 2 moles of phosphorus atoms, and more preferably such that the amount of piperazine is from 0.8 to 1.2 moles with respect to 2 moles of phosphorus atoms.

The piperazine salt (B) can be obtained by allowing a phosphoric acid or a corresponding salt of the phosphoric acid, to react with piperazine. Further, piperazine pyrophosphate and piperazine polyphosphate, among the piperazine salts (B), can also be obtained by the thermal condensation of piperazine orthophosphate.

The epoxy compound which is the component (C) according to the flame retardant composition of the present invention is a compound having one or more epoxy groups within the molecule.

The molecular weight or the number average molecular weight of the component (C) is usually from 300 to 10,000, preferably from 300 to 5,000, and more preferably from 300 to 3,000, from the viewpoints of flame retardancy and water resistance.

The epoxy compound (C) is not particularly limited as long as the compound has one or more epoxy groups within the molecule. Examples of the epoxy compound (C) include: bifunctional phenol diglycidyl ethers such as diglycidyl ethers of bisphenols, for example, 4,4'-oxybisphenol diglycidyl ether, bisphenol A type epoxy resins, bisphenol F type epoxy resins, bisphenol B diglycidyl ether, bisphenol S diglycidyl ether and bisphenol AF diglycidyl ether; trifunctional phenol triglycidyl ethers such as tri(hydroxyphenyl)methane triglycidyl ether, tri(hydroxyphenyl)ethane triglycidyl ether, 1,1,3-tri(hydroxyphenyl)propane triglycidyl ether and trisphenol PA triglycidyl ether; tetrafunctional phenol tetraglycidyl ethers such as tetra(hydroxyphenyl)ethane tetraglycidyl ether; condensed phenol glycidyl ethers such as phenol novolac type epoxy resins, cresol novolac type epoxy resins, bisphenol A novolac type epoxy resins, dicyclopentadiene-phenol addition reaction type epoxy resins, epoxidized products which are condensation products of phenols and aromatic aldehydes having a phenolic hydroxyl group, and biphenyl novolac type epoxy resins; glycidyl ethers of aliphatic polyols or aliphatic polyol ethers, such as polyethylene glycol diglycidyl ether, polypropylene glycol diglycidyl ether, polyglycidyl ethers of polyglycerin, triglycidyl ethers of trimethylolpropane, tetraglycidyl ethers of sorbitol, hexaglycidyl ethers of dipentaerythritol, diglycidyl ethers of polyethylene glycol and diglycidyl ethers of polypropylene glycol; glycidyl ethers of alicyclic alcohols, such as hydrogenated bisphenol A diglycidyl ether and hydrogenated bisphenol F diglycidyl ether; glycidyl esters of aliphatic, aromatic or alicyclic polybasic acids, such as diglycidyl azelate, diglycidyl sebacate, diglycidyl dimerate, triglycidyl trimerate, triglycidyl trimellitate, triglycidyl trimesitate and tetraglycidyl pyromellitate; homopolymers and copolymers of glycidyl acrylate and glycidyl methacrylate; epoxy compounds having glycidyl amino groups, such as bis(4-(N-methyl-n-glycidylamino)phenyl)methane; epoxidized products of cyclic olefin compounds, such as bis(3,4-epoxy -6-methylcyclohexylmethyl)adipate; alicyclic ring-containing multifunctional epoxy compounds, such as 1,2-epoxy-4-(2-oxiranyl)cyclohexane adduct of 2,2-bis(hydroxymethyl)-1-butanol; epoxidized conjugated diene polymers such as epoxidized polybutadienes and epoxidized styrene-butadiene copolymers; epoxidized animal and vegetable oils such as epoxidized soybean oils, epoxidized linseed oils, epoxidized tung oils, epoxidized fish oils, epoxidized beef tallow oils, epoxidized castor oils and epoxidized safflower oils; epoxy group-containing heterocyclic compounds; and epoxy group-containing silane coupling agents such as glycidoxyoctyltrimethoxysilane. Further, these epoxy compounds may also be those internally crosslinked with an isocyanate-terminated prepolymer, or those formed into high molecular weight compounds using a polyvalent active hydrogen compound (such as a polyhydric phenol, a polyamine, a carbonyl group-containing compound or a polyphosphate ester). These epoxy compounds may be used singly, or in combination of two or more kinds thereof.

Among these epoxy compounds, a bifunctional phenol diglycidyl ether, an alicyclic ring-containing multifunctional epoxy compound, and an epoxidized animal or vegetable oil are preferred; a bisphenol A type epoxy resin, a bisphenol F type epoxy resin, 1,2-epoxy-4-(2-oxiranyl)cyclohexane adduct of 2,2-bis(hydroxymethyl)-1-butanol, an epoxidized soybean oil and an epoxidized linseed oil are more preferred; a bisphenol A type epoxy resin, 1,2-epoxy-4-(2-oxiranyl)cyclohexane adduct of 2,2-bis(hydroxymethyl)-1-butanol, an epoxidized soybean oil and an epoxidized linseed oil are still more preferred; and an epoxidized soybean oil and an epoxidized linseed oil are particularly preferred, from the viewpoints of flame retardancy and water resistance.

The epoxy equivalent of the component (C) is preferably from 100 to 1,200 g/eq, more preferably from 120 to 800 g/eq, and still more preferably from 150 to 500 g/eq, from the viewpoint of water resistance. The "epoxy equivalent" refers to a numerical value obtained by dividing the molecular weight of an epoxy compound by the number of epoxy groups in the compound. In the present specification, the epoxy equivalent is defined as a value measured in accordance with JIS K 7236.

The content of the component (B) in the flame retardant composition according to the present invention is preferably from 50 to 80 parts by mass, and more preferably from 55 to 70 parts by mass, with respect to 100 parts by mass of the total amount of the component (A) and the component (B), from the viewpoint of flame retardancy.

The content of the component (C) in the flame retardant composition according to the present invention is preferably from 0.1 to 15 parts by mass, and more preferably from 0.3 to 12 parts by mass, and still more preferably from 0.5 to 11 parts by mass, with respect to 100 parts by mass of the total amount of the component (A) and the component (B), from the viewpoint of water resistance.

**In** the flame retardant composition according to the present invention, at least one of the component (A) and the component (B) is preferably surface treated with the component (C). This makes it possible to further improve the water resistance of the flame retardant composition.

The method of surface treatment is not particularly limited, and examples thereof include a method in which a powdery or granular composition containing at least one of the component (A) and the component (B) is mixed with the component (C); and a method in which the component (C) is added to and mixed with a composition containing at least one of the component (A) and the component (B) by spray drying.

The apparatus to be used for the surface treatment is not particularly limited, and examples thereof include a tumbler mixer, a Henschel mixer, a ribbon blender, a V type mixer, a W type mixer, a super mixer, a Nauter mixer, a single-screw extruder, a twin-screw extruder, a food mixer and a spray dryer.

Heating may be performed at the time of carrying out the surface treatment.
The temperature during the surface treatment is preferably 40°C or higher, from the viewpoint of allowing the surface treatment process to proceed efficiently. In cases where the component (C) has a melting point, the temperature during the surface treatment is preferably equal to or higher than the melting point of the component (C), and more preferably 5°C or higher than the melting point of the component (C). This makes it possible to carry out the surface treatment efficiently and uniformly. Further, the temperature during the surface treatment is preferably 200°C or lower, more preferably 180°C or lower, and still more preferably 170°C or lower. This makes it possible to reduce the coloration of the flame retardant composition.

The flame retardant composition according to the present invention preferably contains, as a component (D), at least one selected from the group consisting of a flame retardant aid and an anti-drip agent.

Such a flame retardant aid can include a metal oxide or a polyol compound. This makes it possible to further improve the flame retardancy of a resin.

Examples of the metal oxide include titanium oxide, zinc oxide, calcium oxide, magnesium oxide, zirconium oxide, barium oxide, tin dioxide, lead dioxide, antimony oxide, molybdenum oxide and cadmium oxide. These metal oxides may be used singly, or in combination of two or more kinds thereof. This makes it possible to improve the flame retardancy of the resin. In addition, it is possible to prevent the formation of aggregates in the flame retardant composition in the form of a powder or granules. Zinc oxide is preferred from the viewpoint of flame retardancy. The zinc oxide may or may not be surface treated.

As the zinc oxide, it is possible to use a commercially available product, such as Zinc Oxide No. 1 (manufactured by Mitsui Mining & Smelting Co., Ltd.), partially coated zinc oxide (manufactured by Mitsui Mining & Smelting Co., Ltd.); NANOFINE 50 (ultrafine particulate zinc oxide having an average particle size of 0.02 µm; manufactured by Sakai Chemical Industry Co., Ltd.); NANOFINE K (zinc silicate-coated ultrafine particulate zinc oxide having an average particle size of 0.02 µm; manufactured by Sakai Chemical Industry Co., Ltd.) or the like.

The polyol compound is a compound to which a plurality of hydroxy groups are bound. Examples of the polyol compound include pentaerythritol, dipentaerythritol, tripentaerythritol, polypentaerythritol, neopentyl glycol, trimethylolpropane, ditrimethylolpropane, 1,3,5-tris(2-hydroxyethyl)isocyanurate, polyethylene glycol, glycerin, diglycerin, mannitol, maltitol, lactitol, sorbitol, erythritol, xylitol, xylose, sucrose, trehalose, inositol, fructose, maltose and lactose. Among these polyol compounds, one or more selected from pentaerythritol, dipentaerythritol, tripentaerythritol and polypentaerythritol are preferred, dipentaerythritol, tripentaerythritol and polypentaerythritol are more preferred, and dipentaerythritol is still more preferred. Further, 1,3,5-tris(2-hydroxyethyl)isocyanurate and sorbitol can also be used suitably. These polyol compounds may be used singly, or in combination of two or more kinds thereof.

Examples of the anti-drip agent include laminar silicates, fluorine-based anti-drip agents, and silicone rubbers. This makes it possible to prevent dripping during the combustion of the resin.

The laminar silicate is a silicate mineral in the form of layers, which may be either natural or synthesized, and is not particularly limited. Examples of the laminar silicate include: smectite-based clay minerals such as montmorillonite, saponite, hectorite, beidellite, stevensite and nontronite; vermiculite; halloysite; swellable mica; and talc. These laminar silicates may be used singly, or in combination of two or more kinds thereof.

Among these laminar silicates, saponite or talc is preferred from the viewpoint of preventing dripping, and talc is particularly preferred from the viewpoint of economic efficiency such as cost.

The laminar silicate may have cations between layers.

The cations may be metal ions, or alternatively, some or all of the cations may be cations other than metal ions, such as organic cations, (quaternary) ammonium cations, phosphonium cations and the like.

Examples of the metal ion include sodium ion, potassium ion, calcium ion, magnesium ion, lithium ion, nickel ion, copper ion and zinc ion. Examples of the organic cation or quaternary ammonium cation include lauryltrimethylammonium cation, stearyltrimethylammonium cation, trioctylmethylammonium cation, distearyldimethylammonium cation, di-hardened beef tallow-dimethylammonium cation and distearyldibenzylammonium cation. These cations may be used singly, or in combination of two or more kinds thereof.

Specific examples of the fluorine-based anti-drip agent include: fluorine-based resins such as polytetrafluoroethylene, polyvinylidene fluoride and polyhexafluoropropylene; and alkali metal salt compounds of perfluoroalkanesulfonic acids and alkaline earth metal salts of perfluoroalkanesulfonic acids, such as sodium perfluoromethanesulfonate, potassium perfluoro-n-butanesulfonate, potassium perfluoro-t-butanesulfonate, sodium perfluorooctanesulfonate and calcium perfluoro-2-ethylhexanesulfonate. Above all, polytetrafluoroethylene is preferred from the viewpoint of anti-drip properties. These fluorine-based anti-drip agents may be used singly, or in combination of two or more kinds thereof.

The content of the component (D), in the case of incorporating the component (D) into the flame retardant composition according to the present invention, is preferably from 0.01 to 15 parts by mass, more preferably from 0.1 to 10 parts by mass, and still more preferably from 0.5 to 8 parts by mass, with respect to 100 parts by mass of the total amount of the component (A) and the component (B), from the viewpoint of enhancing the above-described effect.

The flame retardant composition according to the present invention preferably further contains one or more selected from the group consisting of a silicone oil and a silane coupling agent. This makes it possible to achieve the prevention of the aggregation of the flame retardant composition in the form of a powder, an improvement in the preservation stability of the composition, and an improvement in the dispersibility of the composition in a synthetic resin. In addition, the water resistance can be improved.

The silicone oil can be used without particular limitation as long as it is a known silicone oil having a polysiloxane skeleton. The silicone oil may be a polymer having a linear polysiloxane skeleton, in which the side chains of the polysiloxane may all be methyl groups, some of the side chains may have a phenyl group, or some of the side chains may have a hydrogen.

Examples of the silicone oil include: a dimethyl silicone oil in which the side chains and the terminals of the polysiloxane are all methyl groups; a methylphenyl silicone oil in which the side chains and the terminals of the polysiloxane are methyl groups and some of the side chains are phenyl groups; a methyl hydrogen silicone oil in which the side chains and the terminals of the polysiloxane are methyl groups and some of the side chains are hydrogen; and a copolymer of any of these. These silicone oils may be partially modified by epoxy modification, amino modification, carboxy modification, or the like. These silicone oils may be used singly, or in combination of two or more kinds thereof.

Among these silicone oils, a dimethyl silicone oil and a methyl hydrogen silicone oil are preferred, and a methyl hydrogen silicone oil is more preferred, from the viewpoint of achieving the prevention of the aggregation of the flame retardant composition in the form of a powder, an improvement in the preservation stability of the composition, and an improvement in the dispersibility of the composition in a synthetic resin.

Examples of the silane coupling agent include, for example: silane coupling agents having an alkenyl group, such as vinyltrimethoxysilane, vinyltriethoxysilane, vinyltriacetoxysilane, vinyltris(2-methoxyethoxy)silane, vinylmethyldimethoxysilane, octenyltrimethoxysilane, allyltrimethoxysilane and p-styryltrimethoxysilane; silane coupling agents having an acrylic group, such as 3-acryloxypropyltrimethoxysilane and 3-acryloxypropyltriethoxysilane; silane coupling agents having a methacrylic group, such as 3-methacryloxypropylmethyldimethoxysilane, 3-methacryloxypropyltrimethoxysilane, 3-methacryloxypropylmethyldiethoxysilane, 3-methacryloxypropyltriethoxysilane and methacryloxyoctyltrimethoxysilane; silane coupling agents having an amino group, such as N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, N,N'-bis[3-(trimethoxysilyl)propyl]ethylenediamine and a hydrochloride of N-(vinylbenzyl)-2-aminoethyl-3-aminopropyltrimethoxysilane; silane coupling agents having an isocyanurate group, such as tris-(trimethoxysilylpropyl)isocyanurate; silane coupling agents having a mercapto group, such as 3-mercaptopropylmethyldimethoxysilane, 3-mercaptopropyltrimethoxysilane and 3-mercaptopropyltriethoxysilane; silane coupling agents having an ureido group, such as 3-ureidopropyltrimethoxysilane and 3-ureidopropyltriethoxysilane; silane coupling agents having a sulfide group, such as bis(triethoxysilylpropyl)tetrasulfide; silane coupling agents having a thioester group, such as 3-octanoylthio-1-propyltriethoxysilane; and silane coupling agents having an isocyanate group, such as 3-isocyanatopropyltriethoxysilane and 3-isocyanatopropyltrimethoxysilane. These silane coupling agents may be used singly, or in combination of two or more kinds thereof.

The content of the silicone oil, in the case of incorporating the silicone oil into the flame retardant composition according to the present invention, is preferably from 0.01 to 3 parts by mass, and more preferably from 0.1 to 1 parts by mass, with respect to 100 parts by mass of the total amount of the component (A) and the component (B), from the viewpoint of enhancing the above-described effect by incorporating the silicone oil.

The content of the silane coupling agent, in the case of incorporating the silane coupling agent into the flame retardant composition according to the present invention, is preferably from 0.01 to 3 parts by mass, and more preferably from 0.1 to 1 parts by mass, with respect to 100 parts by mass of the total amount of the component (A) and the component (B), from the viewpoint of enhancing the above-described effect by incorporating the silane coupling agent.

Examples of the method of adding the silicone oil or the silane coupling agent include: a method in which the flame retardant composition is mixed with the silicone oil or the silane coupling agent; and a method in which the silicone oil or the silane coupling agent is added to and mixed with the flame retardant composition by spray drying. Further, the silicone oil or the silane coupling agent may be added to the flame retardant composition by surface treating a part of all of the flame retardant composition with the silicone oil or the silane coupling agent.

The flame retardant composition according to the present invention may contain a processing aid. The processing aid can be selected as appropriate from known processing aids. However, the flame retardant composition may contain an acrylic acid-based processing aid.

Examples of the acrylic acid-based processing aid include: homopolymers and copolymers of alkyl methacrylates, such as methyl methacrylate, ethyl methacrylate and butyl methacrylate; copolymers of the alkyl methacrylates described above, with alkyl acrylates such as methyl acrylate, ethyl acrylate and butyl acrylate; copolymers of the alkyl methacrylates described above, with aromatic vinyl compounds such as styrene, α-methylstyrene and vinyltoluene; and copolymers of the alkyl methacrylates described above, with vinyl cyan compounds such as acrylonitrile and methacrylonitrile. These acrylic acid-based processing aids may be used singly, or in combination of two or more kinds thereof.

The flame retardant composition according to the present invention may contain a dust suppressant. Examples of the dust suppressant include aliphatic dicarboxylic acid ether ester compounds and the silane coupling agents described above.

The flame retardant composition according to the present invention may contain other components to the extent that the effects of the present invention are not impaired. Any additives commonly used for modifying thermoplastic resins can be used as the other components. Examples of the other components include an antioxidant, a photostabilizer, an ultraviolet absorber, a crystal nucleating agent, a clarifying agent, a plasticizer, a lubricant, a flame retardant other than that of the present invention, a reinforcing material, a crosslinking agent, an antistatic agent, a metal soap, a filler, an anti-fogging agent, an anti-plate-out agent, a fluorescent agent, a fungicide, a bactericide, a foaming agent, a metal deactivator, a mold release agent, a pigment and a dye. These other components may be used singly, or in combination of two or more kinds thereof.

Examples of the antioxidant include a phenol-based antioxidant, a phosphite-based antioxidant, a thioether antioxidant, and other antioxidants.

Examples of the phenol-based antioxidant include 2,6-di-*tert*-butyl-p-cresol, 2,6-diphenyl-4-octadecyloxyphenol, distearyl(3,5-di-*tert*-butyl-4-hydroxybenzyl)phosphonate, 1,6-hexamethylene bis[(3,5-di-*tert*-butyl-4-hydroxyphenyl)propionic acid amide], 4,4'-thiobis(6-*tert*-butyl-m-cresol), 2,2'-methylenebis(4-methyl-6-*tert*-butylphenol), 2,2'-methylenebis(4-ethyl-6-*tert*-butylphenol), 4,4'-butylidenebis(6-*tert*-butyl-m-cresol), 2,2'-ethylidenebis(4,6-di-*tert*-butylphenol), 2,2'-ethylidenebis(4-*sec*-butyl-6-*tert*-butylphenol), 1,1,3-tris(2-methyl-4-hydroxy-5-*tert*-butylphenyl)butane, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 2-*tert*-butyl-4-methyl-6-(2-acryloyloxy-3-*tert*-butyl-5-methylbenzyl)phenol, stearyl(3,5-di-*tert*-butyl-4-hydroxyphenyl)propionate, pentaerythritol tetrakis[3-(3,5-di-*tert*-butyl-4-hydroxyphenyl)propionate], thiodiethylene glycol bis[(3,5-di-*tert*-butyl-4-hydroxyphenyl)propionate], 1,6-hexamethylene bis[(3,5-di-*tert*-butyl-4-hydroxyphenyl)propionate], bis[3,3-bis(4-hydroxy-3-*tert*-butylphenyl)butyric acid]glycol ester, bis[2-*tert*-butyl-4-methyl-6-(2-hydroxy-3-*tert*-butyl-5-methylbenzyl)phenyl]terephthalate, 1,3,5-tris[(3,5-di-*tert*-butyl-4-hydroxyphenyl)propionyloxyethyl]isocyanurate, 3,9-bis[1, 1-dimethyl-2-{(3-*tert*-butyl-4-hydroxy-5-methylphenyl)propionyloxy }ethyl]-2,4,8,10-tetraoxaspiro[5,5]undecane and triethylene glycol bis[(3-*tert*-butyl-4-hydroxy-5-methylphenyl)propionate]. These phenol-based antioxidants can be used singly, or two or more kinds thereof can be used in combination.

Examples of the phosphite-based antioxidant include trisnonylphenyl phosphite, tris[2-*tert*-butyl-4-(3-*tert-*butyl-4-hydroxy-5-methylphenylthio)-5-methylphenyl]phosphite, tridecyl phosphite, octyldiphenyl phosphite, didecylmonophenyl phosphite, bis(tridecyl)pentaerythritol diphosphite, bis(nonylphenyl)pentaerythritol diphosphite, bis(2,4-di-tert-butylphenyl)pentaerythritol diphosphite, bis(2,6-di-*tert*-butyl-4-methylphenyl)pentaerythritol diphosphite, bis(2,4,6-tri-*tert*-butylphenyl)pentaerythritol diphosphite, bis(2,4-dicumylphenyl)pentaerythritol diphosphite, tetrakis(tridecyl)isopropylidenediphenol diphosphite, tetrakis(tridecyl)-4,4'-n-butylidenebis(2-*tert*-butyl-5-methylphenol)diphosphite, hexakis(tridecyl)-1,1,3-tris(2-methyl-4-hydroxy-5-*tert*-butylphenyl)butane triphosphite, tetrakis(2,4-di-*tert-*butylphenyl)biphenylene diphosphonite, 9,10-dihydro-9-oxa-10-phosphaphenanthrene-10-oxide, 2,2'-methylenebis(4,6-*tert*-butylphenyl)-2-ethylhexylphosphite, 2,2'-methylenebis(4,6-*tert*-butylphenyl)-octadecyl phosphite, 2,2'-ethylidenebis(4,6-di-*tert-*butylphenyl)fluorophosphite, tris(2-[(2,4,8,10-tetrakis-*tert*-butyl dibenzo[d,f][1,3,2] dioxaphosphepine-6-yl)oxy]ethyl)amine, and a phosphite of 2-ethyl-2-butylpropylene glycol and 2,4,6-tri-*tert*-butylphenol. These phosphite-based antioxidants can be used singly, or two or more kinds thereof can be used in combination.

Examples of the thioether antioxidant include 3,3'-thiodipropionic acid, alkyl(C₁₂₋₁₄)thiopropionic acid, di(lauryl)-3,3'-thiodipropionate, ditridecyl 3,3'-thiobispropionate, di(myristyl)-3,3'-thiodipropionate, di(stearyl)-3,3'-thiodipropionate, di(octadecyl)-3,3'-thiodipropionate, lauryl stearyl thiodipropionate, tetrakis[methylene-3-(dodecylthio)propionate]methane, thiobis(2-*tert*-butyl-5-methyl-4,1-phenylene)bis(3-(dodecylthio)propionate), 2,2'-thiodiethylene bis(3-amino butenoate), 4,6-bis(octyl thiomethyl)-o-cresol, 2,2'-thiodiethylene bis[3-(3,5-di-*tert*-butyl-4-hydroxyphenyl)propionate], 2,2'-thiobis(4-methyl-6-*tert*-butylphenol), 2,2'-thiobis(6-*tert-*butyl-p-cresol), 2-ethylhexyl-(3,5-di-*tert*-butyl-4-hydroxybenzyl)thioacetate, 4,4'-thiobis(6-*tert*-butyl-3-methylphenol), 4,4'-thiobis(4-methyl-6-*tert*-butylphenol), 4,4'-[thiobis(methylene)]bis(2-*tert*-butyl-6-methyl-1-hydroxybenzyl), bis(4,6-di-*tert-*butylphenol-2-yl)sulfide, tridecyl -3,5-di-*tert*-butyl-4-hydroxybenzylthioacetate, 1,4-bis(octyl thiomethyl)-6-methylphenol, 2,4-bis(dodecylthiomethyl)-6-methylphenol, distearyl-disulfide and bis(methyl-4-[3-n-alkyl(C₁₂/C₁₄)thiopropionyloxy]5-*tert*-butylphenyl)sulfide. These thioether antioxidants can be used singly, or two or more kinds thereof can be used in combination.

Examples of the other antioxidants include: nitrone compounds such as N-benzyl-α-phenylnitrone, N-ethyl-α-methylnitrone, N-octyl -α-heptylnitrone, N-lauryl-α-undecylnitrone, N-tetradecyl -α-tridecylnitrone, N-hexadecyl-α-pentadecylnitrone, N-octyl -α-heptadecylnitrone, N-hexadecyl-α-heptadecylnitrone, N-octadecyl -α-pentadecylnitrone, N-heptadecyl-α-heptadecylnitrone and N-octadecyl -α-heptadecylnitrone; and benzofuran compounds such as 3-arylbenzofuran-2(3H)-one, 3-(alkoxyphenyl)benzofuran-2-one, 3-(acyloxyphenyl)benzofuran-2(3H)-one, 5,7-di-*tert*-butyl-3-(3,4-dimethylphenyl)-benzofuran-2(3H)-one, 5,7-di-*tert*-butyl-3-(4-hydroxyphenyl)-benzofuran-2(3H)-one, 5,7-di-*tert*-butyl-3-{4-(2-hydroxyethoxy)phenyl }-benzofuran-2(3H)-one, 6-(2-(4-(5,7-di-*tert*-2-oxo-2,3-dihydrobenzofuran-3-yl)phenoxy)ethoxy)-6-oxohexyl-6-((6-hydroxyhexanoyl)oxy)hexanoate and 5-di-*tert*-butyl-3-(4-((15-hydroxy-3,6,9,13-tetraoxapentadecyl)oxy)phenyl)benzofuran-2(3H)-one. These other antioxidants can be used singly, or two or more kinds thereof can be used in combination.

Examples of the photostabilizer include 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)/ bis(tridecyl)-1,2,3,4-butanetetracarboxylate, bis(1,2,2,6,6-pentamethyl-4-piperidyl)/ bis(tridecyl)-1,2,3,4-butanetetracarboxylate, bis(1,2,2,6,6-pentamethyl-4-piperidyl)-2-butyl-2-*(3,5-di-tert-butyl-4-hydroxybenzyl)malonate,* 1-(2-hydroxyethyl)-2,2,6,6-tetramethyl-4-piperidinol/diethyl succinate polycondensate, 1,6-bis(2,2,6,6-tetramethyl-4-piperidylamino)hexane/ 2,4-dichloro-6-morpholino-s-triazine polycondensate, 1,6-bis(2,2,6,6-tetramethyl-4-piperidylamino)hexane/ 2,4-dichloro-6-*tert*-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis(2,2,6,6-tetramethyl-1-octyloxy-4-piperidyl)decanedioate, bis(2,2,6,6-tetramethyl-1-undecyloxypiperidine-4-yl)carbonate, 2,2,6,6-tetramethyl-4-piperidylmethacrylate, 1,2,3,4-butanetetracarboxylic acid, a polymer of 2,2-bis(hydroxymethyl)-1,3-propanediol and 3-hydroxy-2,2-dimethylpropanal, 1,2,2,6,6-pentamethyl-4-piperidinyl ester, 1,3-bis(2,2,6,6-tetramethylpiperidine-4-yl)2,4-ditridecylbenzene-1,2,3,4,tetracarboxylate, bis(1-octyloxy-2,2,6,6-tetramethyl-4-piperidyl)sebacate, poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]) and TINUVIN NOR 371 manufactured by BASF SE. These photostabilizers can be used singly, or two or more kinds thereof can be used in combination.

Examples of the ultraviolet absorber include: 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-*tert*-butylphenyl)-5-chlorobenzotriazole, 2-(2'-hydroxy-3'-*tert*-butyl-5'-methylphenyl)-5-chlorobenzotriazole, 2-(2'-hydroxy-5'-*tert*-octylphenyl) benzotriazole, 2-(2'-hydroxy-3',5'-dicumylphenyl)benzotriazole, 2,2'-methylenebis(4-*tert*-octyl-6-(benzotriazolyl)phenol) and 2-(2'-hydroxy-3'-*tert*-butyl-5'-carboxyphenyl)benzotriazole; benzoates such as phenyl salicylate, resorcinol monobenzoate, 2,4-di-*tert*-butylphenyl-3,5-di-*tert*-butyl-4-hydroxybenzoate, 2,4-di-*tert*-amylphenyl-3,5-di-*tert*-butyl-4-hydroxybenzoate and hexadecyl-3,5-di-*tert*-butyl-4-hydroxybenzoate; substituted oxanilides such as 2-ethyl-2'-ethoxyoxanilide and 2-ethoxy-4'-dodecyl oxanilide; cyanoacrylates such as ethyl-α-cyano-β, β-diphenyl acrylate and methyl-2-cyano-3-methyl-3-(p-methoxyphenyl)acrylate; triaryltriazines such as 2-(2-hydroxy-4-octoxyphenyl)-4,6-bis(2,4-di-*tert*-butylphenyl)-s-triazine, 2-(2-hydroxy-4-methoxyphenyl)-4,6-diphenyl-s-triazine and 2-(2-hydroxy-4-propoxy-5-methylphenyl)-4,6-bis(2,4-di-*tert*-butylphenyl)-s-triazine. These ultraviolet absorbers can be used singly, or two or more kinds thereof can be used in combination.

Examples of the crystal nucleating agent include: metal salts of carboxylic acids, such as sodium benzoate, 4-*tert*-butylbenzoate aluminum salt, sodium adipate and 2-sodium bicyclo[2.2.1]heptane-2,3-dicarboxylate; metal salts of phosphate esters, such as sodium bis(4-*tert*-butylphenyl)phosphate, sodium-2,2'-methylenebis(4,6-di-*tert-*butylphenyl)phosphate and lithium-2,2'-methylenebis(4,6-di-*tert*-butylphenyl)phosphate; polyol derivatives such as dibenzylidene sorbitol, bis(methylbenzylidene)sorbitol, bis(3,4-dimethylbenzylidene)sorbitol, bis(p-ethylbenzylidene)sorbitol, bis(dimethylbenzylidene)sorbitol, 1,2,3-trideoxy-4,6:5,7-bis-O-((4-propylphenyl)methylene)-nonitol, 1,3:2,4-bis(p-methylbenzylidene)sorbitol and 1,3:2,4-bis-O-benzylidene-D-glucitol (dibenzylidene sorbitol); and amide compounds such as N,N',N"-tris[2-methylcyclohexyl]-1,2,3-propanetricarboxamide, N,N',N"-tricyclohexyl-1,3,5-benzenetricarboxamide, N,N'-dicyclohexyl-naphthalenedicarboxamide and 1,3,5-tri(dimethyl isopropoyl amino)benzene. These crystal nucleating agents can be used singly, or two or more kinds thereof can be used in combination.

Examples of the plasticizer include methacrylate-based plasticizers; polyester-based plasticizers, such as a polycondensate of a dicarboxylic acid and a polyol, and a polycondensate of a polycarboxylic acid and a polyol; polyether ester-based plasticizers, such as a polycondensate of a dicarboxylic acid, a polyol and an alkylene glycol, a polycondensate of a dicarboxylic acid, a polyol and an arylene glycol, a polycondensate of a polycarboxylic acid, a polyol and an alkylene glycol, and a polycondensate of a polycarboxylic acid, a polyol and an arylene glycol; aliphatic ester-based plasticizers such as adipate esters and succinate esters; and aromatic ester-based plasticizers such as phthalate esters, terephthalate esters, trimellitate esters, pyromellitate esters, and benzoate esters. These plasticizers can be used singly, or two or more kinds thereof can be used in combination.

Examples of the lubricant include: pure hydrocarbon-based lubricants such as liquid paraffin, natural paraffin, microwax, synthesized paraffin, low molecular weight polyethylene and polyethylene wax; halogenated hydrocarbon-based lubricants; fatty acid-based lubricants such as higher fatty acids and oxy-fatty acids; fatty acid amide-based lubricants such as fatty acid amides and bis-fatty acid amides; ester-based lubricants such as lower alcohol esters of fatty acids, polyol esters of fatty acids such as glycerides, polyglycol esters of fatty acids, and fatty alcohol esters of fatty acids (ester waxes); metal soaps; fatty alcohols; polyols; polyglycols; polyglycerols; and partial ester-based lubricants such as partial esters of fatty acids and polyols, and partial esters of fatty acids and polyglycols or polyglycerols; silicone oils; and mineral oils. These lubricants can be used singly, or two or more kinds thereof can be used in combination.

Examples of the flame retardant other than that of the present invention include: aromatic phosphate esters such as triphenyl phosphate, tricresyl phosphate, trixylenyl phosphate, cresyl diphenyl phosphate, cresyl-2,6-dxylenyl phosphate, resorcinol bis(diphenyl phosphate), (1-methylethylidene)-4,1-phenylenetetraphenyl diphosphate, 1,3-phenylene tetrakis(2,6-dimethylphenyl)phosphate, and "ADEKA STAB" (brand name) series manufactured by ADEKA Corporation, such as ADEKA STAB FP-500", "ADEKA STAB FP-600", "ADEKA STAB FP-800" and "ADEKA STAB FP-900L"; phosphonate esters such as divinyl phenylphosphonate, diallyl phenylphosphonate and (1-butenyl) phenylphosphonate; phosphinate esters such as phenyl diphenylphosphinate, methyl diphenylphosphinate and 9,10-dihydro-9-oxa-10-phosphaphenanthrene-10-oxide derivatives; dialkyl phosphinates such as aluminum diethylphosphinate and zinc diethylphosphinate; phosphazene compounds such as bis(2-allylphenoxy)phosphazene and dicresylphosphazene; inorganic phosphorus-based flame retardants such red phosphorus; metal hydroxides such as magnesium hydroxide and aluminum hydroxide; and bromine-based flame retardants such as brominated bisphenol A type epoxy resins, brominated phenol novolac type epoxy resins, hexabromobenzene, pentabromotoluene, ethylene bis(pentabromophenyl), ethylene bistetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ethers, brominated polystyrenes, 2,4,6-tris(tribromophenoxy)-1,3,5-triazine, tribromophenyl maleimide, tribromophenyl acrylate, tribromophenyl methacrylate, tetrabromobisphenol A type dimethacrylates, pentabromobenzyl acrylate and brominated styrenes. These flame retardants can be used singly, or two or more kinds thereof can be used in combination.

Examples of the antistatic agent include: cationic antistatic agents such as fatty acid quaternary ammonium ion salts and polyamine quaternary salts; anionic antistatic agents such as higher alcohol phosphate ester salts, higher alcohol EO adducts, polyethylene glycol fatty acid esters, anionic alkyl sulfonates, higher alcohol sulfate ester salts, sulfate ester salts of higher alcohol ethylene oxide adducts, and phosphate ester salts of higher alcohol ethylene oxide adducts; nonionic antistatic agents such as polyol fatty acid esters, polyglycol phosphate esters and polyoxyethylene alkyl allyl ethers; and amphoteric antistatic agents including amphoteric alkyl betaines such as alkyldimethylaminoacetic acid betaines, and imidazoline-type amphoteric active agents. These antistatic agents can be used singly, or two or more kinds thereof can be used in combination.

Examples of the filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clay, dolomite, silica, alumina, potassium titanate whiskers, wollastonite, fibrous magnesium oxysulfate and montmorillonite. The particle size (the fiber diameter or the fiber length and the aspect ratio, in the case of a fibrous filler) of the filler can be selected and used, as appropriate. These fillers can be used singly, or two or more kinds thereof can be used in combination. Further, it is also possible to use a filler subjected to a surface treatment, if necessary.

Examples of the pigment include: Pigment Red 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240 and 254; Pigment Orange 13, 31, 34, 36, 38, 43, 46, 48, 49, 51, 52, 55, 59, 60, 61, 62, 64, 65 and 71; Pigment Yellow 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180 and 185; Pigment Green 7, 10 and 36; Pigment Blue 15, 15:1, 15:2, 15:3, 15:4, 15:5, 15:6, 22, 24, 56, 60, 61, 62 and 64; and Pigment Violet 1, 19, 23, 27, 29, 30, 32, 37, 40 and 50. These pigments can be used singly, or two or more kinds thereof can be used in combination.

Examples of the dye include dyes such as azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes and cyanine dyes. These dyes can be used singly, or two or more kinds thereof can be used in combination.

One or more selected from the flame retardant aid, the anti-drip agent, the processing aid, the dust suppressant and the additives composed of other components, which have been described above, may be incorporated into the above-described flame retardant composition, or may be incorporated into the flame-retardant resin composition to be described later.

The flame retardant composition according to the present invention is effective for imparting frame retardancy to a synthetic resin, and is preferably used as a flame-retardant resin composition by being incorporated into the synthetic resin.

### < Flame-retardant Resin Composition >

Next, the flame-retardant resin composition according to the present embodiment will be described.

The flame-retardant resin composition according to the present invention contains the flame retardant composition described above, and a thermoplastic resin. The content of the flame retardant composition is usually from 10 to 400 parts by mass, preferably from 15 to 200 parts by mass, and more preferably from 20 to 70 parts by mass, with respect to 100 parts by mass of the thermoplastic resin. This makes it possible to sufficiently improve the flame retardancy of the thermoplastic resin.

Examples of the thermoplastic resin include synthetic resins such as polyolefin-based resins, styrene-based resins, polyester-based resins, polyether-based resins, polycarbonatebased resins, polyamide-based resins and halogen-containing resins. These thermoplastic resins may be used singly, or in combination of two or more kinds thereof.

Further examples of the thermoplastic resin which can be used include: thermoplastic resins such as petroleum resins, coumarone resins, polyvinyl acetate, acrylic resins, polymethyl methacrylate, polyvinyl alcohol, polyvinyl formal, polyvinyl butyral, polyphenylene sulfide, polyurethane, cellulose-based resins, polyimide resins, polysulfone and liquid crystal polymers; and blends thereof.

**In** addition, the thermoplastic resin may be a thermoplastic elastomer such as an isoprene rubber, a butadiene rubber, an ethylene-propylene rubber, an ethylene-propylene-diene rubber, an acrylonitrile-butadiene copolymer rubber, a styrene-butadiene copolymer rubber, an olefin-based elastomer, a styrene-based elastomer, a polyester-based elastomer, a nitrile-based elastomer, a Nylon-based elastomer, a vinyl chloride-based elastomer, a polyamide-based elastomer or a polyurethane-based elastomer. These thermoplastic resins may be used in any combination.

Specific examples of the thermoplastic resin include, but not particularly limited to: polyolefin-based resins, for example, α-olefin polymers such as polypropylene, high-density polyethylene, low-density polyethylene, linear low-density polyethylene, polybutene-1, poly-3-methylpentene, poly-4-methylpentene, ethylene/propylene block or random copolymers; thermoplastic linear polyester-based resins such as polyethylene terephthalate, polybutylene terephthalate and polyhexamethylene terephthalate; polysulfide-based resins such as polyphenylene sulfide; polylactic acid-based resins such as polycaprolactone; linear polyamide-based resins such as polyhexamethylene adipamide; and crystalline polystyrene-based resins such as syndiotactic polystyrene.

These thermoplastic resins can be used regardless of the molecular weight, the degree of polymerization, the density, the softening point, the proportion of insoluble content in a solvent, the degree of stereoregularity, the presence or absence of catalyst residues, the type and the mixing ratio of a monomer as a raw material, the type of polymerization catalyst (such as a Ziegler catalyst or a metallocene catalyst) and the like. Among these thermoplastic resins, one or more selected from the group consisting of a polyolefin-based resin, a polystyrene-based resin and a copolymer thereof are preferred, a polyolefin-based resin is more preferred, polypropylene, high-density polyethylene, low-density polyethylene and linear low-density polyethylene are still more preferred, from the viewpoint that an excellent flame retardancy can be imparted. The use of any of these resins with a thermoplastic elastomer is also preferred.

If necessary, the flame-retardant resin composition according to the present invention may contain one or more selected from the flame retardant aid, the anti-drip agent, the processing aid, the dust suppressant and the additives composed of other components, which have been described above, in addition to the flame retardant composition according to the present invention. These components may be used singly, or in combination of two or more kinds thereof.

The content of the additives (excluding the filler and the flame retardant other than that of the present invention), in the flame-retardant resin composition according to the present invention, is, for example, from 0.001 to 15 parts by mass, preferably from 0.005 to 10 parts by mass, and more preferably from 0.01 to 5 parts by mass, with respect to 100 parts by mass of the thermoplastic resin. Adjusting the content of the additives within such a numerical range, an improvement in the effect of additives can be obtained.

The content of the filler, in the case of incorporating the filler into the flame-retardant resin composition according to the present invention is, for example, from 1 to 100 parts by mass, preferably from 3 to 80 parts by mass, and more preferably from 5 to 50 parts by mass, with respect to 100 parts by mass of the thermoplastic resin.

The content of the flame retardant other than that of the present invention, in the case of incorporating the flame retardant other than that of the present invention into the flame-retardant resin composition according to the present invention, is, for example, from 1 to 200 parts by mass, preferably from 3 to 150 parts by mass, and more preferably from 5 to 80 parts by mass, with respect to 100 parts by mass of the thermoplastic resin.

In cases where a polyolefin-based resin or an olefin-based elastomer is used as the thermoplastic resin, in the flame-retardant resin composition according to the present invention, it is preferred that the resin composition contains a known neutralizer to the extent that the effects of the present invention are not impaired, in order to neutralize catalyst residues in the resin. Examples of the neutralizer include: metal salts of fatty acids, such as calcium stearate, lithium stearate, sodium stearate and magnesium stearate; fatty acid amide compounds such as ethylene bis(stearic acid amide), ethylene bis(12-hydroxystearic acid amide) and stearic acid amide; and inorganic compounds such as hydrotalcite. These neutralizers can be used singly, or two or more kinds thereof can be used in combination. These neutralizers are used preferably in an amount of from 0.001 to 3 parts by mass, and more preferably in an amount of from 0.01 to 1 part by mass, with respect to 100 parts by mass of the thermoplastic resin.

Next, the method of producing the flame-retardant resin composition will be described.

The flame-retardant resin composition according to the present invention can be obtained by mixing the above-described flame retardant composition and a thermoplastic resin. If necessary, any of the additives described above may be mixed. The additives may be mixed into the flame retardant composition, or may be mixed into a mixture of the flame retardant composition and the thermoplastic resin.

A commonly used known method can be used as it is, as the method of mixing the flame retardant composition and the thermoplastic resin. Examples of the method include: a method of mixing the flame retardant composition, the thermoplastic resin, and additives if necessary, using a mixer such as a regular blender or mixer; a method of melt kneading the above components using an extruder or the like; and a method of mixing the above components with a solvent, to be subjected to solution casting.

The flame-retardant resin composition according to the present invention can be used in various forms, such as, for example, in the form of pellets, granules or a powder. The flame-retardant resin composition is preferably in the form of pellets, from the viewpoint of handleability.

### < Molded Article >

Next, the molded article according to the present invention will be described.

The molded article according to the present invention is obtained by molding the flame-retardant resin composition according to the present invention. The molding method is not particularly limited, and examples thereof include methods such as injection molding, extrusion molding, blow molding, rotational molding, vacuum molding, inflation molding, calendar molding, slash molding, dip molding, foaming molding and additive manufacturing. Among these molding methods, injection molding, extrusion molding and blow molding are preferred. This makes it possible to produce a molded article having any of various shapes, such as a resin plate, a sheet, a film or an irregularly shaped product.

The molded article obtained using the flame-retardant resin composition according to the present invention can be used in various types of applications. For example, the molded article can be used in various applications, such as electric and electronic components, mechanical parts, optical devices, construction members, automotive parts and daily necessities. Above all, the molded article can be suitably used in electric and electronic components and construction members, from the viewpoint of flame retardancy.

The flame-retardant resin composition and the molded article thereof according to the present invention can be used in a wide range of industrial fields, for example, in the fields of: electrics, electronics and communications; agriculture, forestry and fisheries; mining; constructions; food; fibers; clothing; medicals; coal; petroleum; rubber; leather; automobiles; precision instruments; lumber; building materials, civil engineering, furniture, printing and musical instruments. Specifically, the flame-retardant resin composition and the molded article thereof according to the present invention can be used in: office and automation equipment, such as printers, personal computers, word processors, key boards, PDAs (personal digital assistants), telephones, copying machines, facsimile machines, ECRs (electronic cash registers), electronic calculators, electronic organizers, cards, holders and stationeries; home electrical appliances such as; washing machines, refrigerators, vacuum cleaners, microwave ovens, lighting equipment, game machines, smoothing irons, kotatsu (Japanese foot warmer); AV equipment such as TVs, VTRs, video cameras, radio cassette players, tape recorders, mini-disks, CD players, speakers and liquid crystal displays; electric and electronic components and communication equipment, such as connectors, relays, condensers, switches, printed circuit boards, coil bobbins, semiconductor sealing materials, LED sealing materials, electric wires, cables, transformers, deflection yokes, distribution boards and watches.

The flame-retardant resin composition and the molded article thereof according to the present invention can be used in various fields, for example; in the fields of: materials for automobiles, vehicles, marine vessels, aircrafts, buildings and housing, such as seats (for example, stuffing and upholstery), belts, ceiling coverings, convertible tops, arm rests, door trims, rear package trays, carpets, mats, sun visors, wheel covers, mattress covers, air bags, insulating materials, assist grips, assist straps, electric wire coverings, electric insulating materials, paints, coating materials, overlay materials, flooring materials, inside corner moldings, carpets, wall papers, wall coverings, exterior covering, interior covering, roofing materials, decking materials, wall materials, pillar materials, floor boards, fence materials, frames and moldings, profiles for windows and doors, roof shingles, siding boards, terraces, balconies, soundproofing boards, heat insulating boards and window materials; construction materials and civil engineering materials; and housewares and sporting equipment, such as clothing, curtains, bed sheets, chip boards, synthetic fiber boards, carpets and rugs, door mats, sheets, buckets, hoses, containers, glasses, bags, cases, goggles, skis, rackets, tents and musical instruments.

While the embodiments of the present invention have been described above, these embodiments are examples of the present invention, and it is possible to employ various configurations other than those described above. Further, the present invention is not limited to the embodiments described above, and modifications, improvements and the like within the range that allows the object of the present invention to be achieved are included in the present invention.

### EXAMPLES

The present invention will now be described in detail with reference to Examples. However, the present invention is in no way limited to these Examples. The blending amounts shown in Tables 1 to 13 are all based on parts by mass.

### [Examples 1 to 46 and Comparative Examples 1 to 18]

### < Production Example 1: Production of Component (A): Melamine Salt >

Melamine orthophosphate was subjected to a thermal condensation reaction in a solid state, at 220°C for 6 hours, to produce a melamine salt containing melamine pyrophosphate as a main component. The melamine salt was used without purification. The purity of the melamine pyrophosphate in the melamine salt was 98.5%.

### < Production Example 2: Production of Component (B): Piperazine Salt >

Piperazine diphosphate was subjected to a thermal condensation reaction in a solid state, at 250°C for 1 hour, to produce a piperazine salt containing piperazine pyrophosphate as a main component. The piperazine salt was used without purification. The purity of the piperazine pyrophosphate in the piperazine salt was 99.0%.

The purity of the thus obtained melamine salt and piperazine salt was measured using an ion chromatograph measuring apparatus ICS-2100 (manufactured by Thermo Fisher Scientific Inc.), Dionex IonPac AS-19 columns (manufactured by Thermo Fisher Scientific Inc.), and an electrical conductivity detector.

### < Production Example 3: Production of Polypropylene Composition 1 >

A quantity of 0.1 parts by mass of pentaerythritol tetrakis[3-(3,5-di-tert-butyl-4-hydroxyphenyl)propionate] as a phenol-based antioxidant, 0.1 parts by mass of tris(2,4-di-tert-butylphenyl)phosphite as a phosphorus-based antioxidant, and 0.05 parts by mass of calcium stearate as a neutralizer, with respect to 100 parts by mass of an impact copolymer polypropylene (melt flow rate [230°C, load 2.16 kg]: 30 g/10 min), were mixed, to prepare a polypropylene composition 1.

### < Production Example 4: Production of polypropylene composition 2 >

A quantity of 0.1 parts by mass of pentaerythritol tetrakis[3-(3,5-di-tert-butyl-4-hydroxyphenyl)propionate] as a phenol-based antioxidant, 0.1 parts by mass of tris(2,4-di-tert-butylphenyl)phosphite as a phosphorus-based antioxidant, and 0.05 parts by mass of calcium stearate as a neutralizer, with respect to 100 parts by mass of an impact copolymer polypropylene (melt flow rate [230°C, load 2.16 kg]: 14 g/10 min), were mixed, to prepare a polypropylene composition 2.

Details of the respective components shown in Tables 1 to 13 are described below. Polypropylene composition 1: the polypropylene composition produced in the Production Example 3 was used.
Polypropylene composition 2: the polypropylene composition produced in the Production Example 4 was used.
(A) Melamine salt: the melamine salt produced in the Production Example 1 was used.
(B) Piperazine salt: the piperazine salt produced in the Production Example 2 was used.
(C) Epoxy compound 1: an epoxidized soybean oil (brand name: ADEKA CIZER O-130P, molecular weight: about 920, epoxy equivalent: 232 g/eq; manufactured by ADEKA Corporation)
(C) Epoxy compound 2: an epoxidized linseed oil (brand name: ADEKA CIZER O-180A, molecular weight: about 950, epoxy equivalent: 175 g/eq; manufactured by ADEKA Corporation)
(C) Epoxy compound 3: a bisphenol A type epoxy resin (brand name: ADEKA RESIN EP-4100, number average molecular weight: 380, epoxy equivalent: 190 g/eq; manufactured by ADEKA Corporation)
(C) Epoxy compound 4: 1,2-epoxy-4-(2-oxiranyl)cyclohexane adduct of 2,2-bis(hydroxymethyl)-1-butanol (brand name: EPHE3150, number average molecular weight: about 2,200, epoxy equivalent: 180 g/eq; manufactured by Daicel Corporation) Comparison component of (C): Epoxy compound 5: an ethylene-glycidyl methacrylate copolymer (brand name: BONDFAST BF-2C, number average molecular weight: 80,000, epoxy equivalent: 1,400 g/eq; manufactured by Sumitomo Chemical CO., Ltd.) Comparison component of (C): Epoxy compound 6: a graft polymer of an ethylene-glycidyl methacrylate copolymer and polystyrene (brand name: MODIPER A4100, number average molecular weight: 238,000, epoxy equivalent: 1,400 g/eq; manufactured by NOF Corporation)
(D) Flame retardant aid: zinc oxide (brand name: Zinc Oxide No. 1, manufactured by Mitsui Mining & Smelting Co., Ltd.)
(D) Anti-drip agent: polytetrafluoroethylene (brand name: POLYFLON MPA FA-500H, manufactured by Daikin Industries, Ltd.)

### < Production of Flame-retardant Resin Composition (Examples 1 to 30 and Comparative Examples 1 to 18) >

In each of the Examples and Comparative Examples, the respective components were mixed in the blending amounts shown in Tables 1 to 10, and the mixture was melt-kneaded by a twin-screw extruder (TEX25αIII, manufactured by The Japan Steel Works, Ltd.), under the conditions of a cylinder temperature of from 180 to 230°C and a screw speed of 150 rpm, to obtain a resin strand. The resulting resin strand was cut with a pelletizer, to obtain a flame-retardant resin composition in the form of pellets.

### < Production of Flame-retardant Resin Composition (Examples 31 to 46) >

In each of the Examples, the respective components other than the polypropylene composition were weighed in the blending amounts shown in Tables 11 to 13, and mixed using a Henschel mixer (FM100, manufactured by Mitsui Mining Co., Ltd.) at a rotational speed of 850 rpm and an internal tank temperature of 80°C for 10 minutes, to obtain a flame retardant composition which had been surface treated with the epoxy compound. The resulting flame retardant composition and the polypropylene composition were mixed, and the mixture was melt-kneaded by a twin-screw extruder (TEX25αIII, manufactured by The Japan Steel Works, Ltd.), under the conditions of a cylinder temperature of from 180 to 230°C and a screw speed of 150 rpm, to obtain a resin strand. The resulting resin strand was cut with a pelletizer, to obtain a flame-retardant resin composition in the form of pellets.

### < Preparation of Test Pieces for Evaluation Test >

**In** each Example and Comparative Example, the thus obtained flame-retardant resin composition in the form of pellets was injection-molded by an injection molding machine (EC60NII-1.5A, manufactured by Toshiba Machine Co., Ltd.), under the conditions of a resin temperature of 230°C and a mold temperature of 40°C, to obtain test pieces each having a size of 127 mm × 12.7 mm × 1.6 mm. The evaluation of water resistance and flame retardancy was carried out using the resulting test pieces.

### < Evaluation of Water Resistance >

Ten pieces of the above prepared test pieces were immersed in 800 mL of ultrapure water, left to stand at 70°C for 168 hours, and then the test pieces were taken out. The electric conductivity (µS/cm) of the water after immersion was measured using an EC tester/ HI98303N (DiST3) manufactured by Hanna Instruments, at a measurement temperature of 25°C. The lower the electrical conductivity of the water after the immersion of the test piece, the more reduced the dissolution amount of water-soluble components, indicating a higher water resistance. The results are shown in Tables 1 to 13.

### < Evaluation of Flame Retardancy: UL-94V >

Each of the above prepared test pieces was kept vertically, the flame of a burner was brought into contact with the lower end of each test piece for 10 seconds, then the flame was removed, and the combustion time t1, which is the period of time until the flame ignited on the test piece disappears, was measured. Subsequently, the second flame contact for 10 seconds was started simultaneously with the disappearance of the flame, and the combustion time t2, which is the period of time until the flame ignited on the test piece disappears, was measured in the same manner as the first flame contact. Further, whether or not cotton placed underneath the test piece is ignited by falling sparks was evaluated at the same time. Combustion ranking was performed based on t1, t2, the presence or absence of the ignition of the cotton, and the like, in accordance with the UL-94 standard. V-0 is the highest combustion rank, and the flame retardancy decreases as the combustion rank decreases to V-1, V-2 and so on. However, those which do not fall in any of the V-0 to V-2 ranks are determined as NR. The results of the combustion ranking are shown in Tables 1 to 13.

Further, the evaluation of flame retardancy was carried out in the same manner, also for the 10 test pieces after being immersed in water in the water resistance test described above. In the combustion test, the test pieces which had been dried for 336 h in a constant temperature and humidity oven controlled to 23°C and 50% RH, after being immersed in water in the evaluation of water resistance, were used. The results of the combustion ranking are shown in Tables 1 to 13.

**[Table 1]**

| | Example 1 | Example 2 | Example 3 | Example 4 | Example 5 | Example 6 |
|---|---|---|---|---|---|---|
| Polypropylene Composition 1 | 79.6 | 79.3 | 78.8 | 77.8 | 79.6 | 79.3 |
| (A) Melamine Salt | 7.6 | 7.6 | 7.6 | 7.6 | 7.6 | 7.6 |
| (B) Piperazine Salt | 11.4 | 11.4 | 11.4 | 11.4 | 11.4 | 11.4 |
| (C) Epoxy Compound 1 | 0.2 | 0.5 | 1 | 2 | - | - |
| (C) Epoxy Compound 2 | - | - | - | - | 0.2 | 0.5 |
| (C) Epoxy Compound 3 | - | - | - | - | - | - |
| (C) Epoxy Compound 4 | - | - | - | - | - | - |
| Comparison of (C): Epoxy Compound 5 | - | - | - | - | - | - |
| Comparison of (C): Epoxy Compound 6 | - | - | - | - | - | - |
| (D) Flame Retardant Aid | 1 | 1 | 1 | 1 | 1 | 1 |
| (D) Anti-drip Agent | 0.2 | 0.2 | 0.2 | 0.2 | 0.2 | 0.2 |
| Water resistance (µS/cm) | 63 | 62 | 55 | 60 | 64 | 63 |
| Flame Retardancy | V-0 | V-0 | V-0 | V-0 | V-0 | V-0 |
| Flame Retardancy after Water Immersion | V-0 | V-0 | V-0 | V-0 | V-0 | V-0 |

**[Table 2]**

| | Example 7 | Example 8 | Example 9 | Example 10 | Example 11 | Example 12 |
|---|---|---|---|---|---|---|
| Polypropylene Composition 1 | 78.8 | 77.8 | 79.6 | 79.3 | 78.8 | 77.8 |
| (A) Melamine Salt | 7.6 | 7.6 | 7.6 | 7.6 | 7.6 | 7.6 |
| (B) Piperazine Salt | 11.4 | 11.4 | 11.4 | 11.4 | 11.4 | 11.4 |
| (C) Epoxy Compound 1 | - | - | - | - | - | - |
| (C) Epoxy Compound 2 | 1 | 2 | - | - | - | - |
| (C) Epoxy Compound 3 | - | - | 0.2 | 0.5 | 1 | 2 |
| (C) Epoxy Compound 4 | - | - | - | - | - | - |
| Comparison of (C): Epoxy Compound 5 | - | - | - | - | - | - |
| Comparison of (C): Epoxy Compound 6 | - | - | - | - | - | - |
| (D) Flame Retardant Aid | 1 | 1 | 1 | 1 | 1 | 1 |
| (D) Anti-drip Agent | 0.2 | 0.2 | 0.2 | 0.2 | 0.2 | 0.2 |
| Water resistance (µS/cm) | 57 | 59 | 76 | 68 | 58 | 63 |
| Flame Retardancy | V-0 | V-0 | V-0 | V-0 | V-0 | V-0 |
| Flame Retardancy after Water Immersion | V-0 | V-0 | V-0 | V-0 | V-0 | V-0 |

**[Table 3]**

| | Example 13 | Example 14 | Example 15 | Example 16 |
|---|---|---|---|---|
| Polypropylene Composition 1 | 79.6 | 79.3 | 78.8 | 77.8 |
| (A) Melamine Salt | 7.6 | 7.6 | 7.6 | 7.6 |
| (B) Piperazine Salt | 11.4 | 11.4 | 11.4 | 11.4 |
| (C) Epoxy Compound 1 | - | - | - | - |
| (C) Epoxy Compound 2 | - | - | - | - |
| (C) Epoxy Compound 3 | - | - | - | - |
| (C) Epoxy Compound 4 | 0.2 | 0.5 | 1 | 2 |
| Comparison of (C): Epoxy Compound 5 | - | - | - | - |
| Comparison of (C): Epoxy Compound 6 | - | - | - | - |
| (D) Flame Retardant Aid | 1 | 1 | 1 | 1 |
| (D) Anti-drip Agent | 0.2 | 0.2 | 0.2 | 0.2 |
| Water resistance (µS/cm) | 60 | 58 | 55 | 53 |
| Flame Retardancy | V-0 | V-0 | V-0 | V-0 |
| Flame Retardancy after Water Immersion | V-0 | V-0 | V-0 | V-0 |

**[Table 4]**

| | Comparative Example 1 | Comparative Example 2 | Comparative Example 3 | Comparative Example 4 | Comparative Example 5 |
|---|---|---|---|---|---|
| Polypropylene Composition 1 | 79.8 | 79.6 | 79.3 | 78.8 | 77.8 |
| (A) Melamine Salt | 7.6 | 7.6 | 7.6 | 7.6 | 7.6 |
| (B) Piperazine Salt | 11.4 | 11.4 | 11.4 | 11.4 | 11.4 |
| (C) Epoxy Compound 1 | - | - | - | - | - |
| (C) Epoxy Compound 2 | - | - | - | - | - |
| (C) Epoxy Compound 3 | - | - | - | - | - |
| (C) Epoxy Compound 4 | - | - | - | - | - |
| Comparison of (C): Epoxy Compound 5 | - | 0.2 | 0.5 | 1 | 2 |
| Comparison of (C): Epoxy Compound 6 | - | - | - | - | - |
| (D) Flame Retardant Aid | 1 | 1 | 1 | 1 | 1 |
| (D) Anti-drip Agent | 0.2 | 0.2 | 0.2 | 0.2 | 0.2 |
| Water resistance (µS/cm) | 174 | 102 | 83 | 54 | 49 |
| Flame Retardancy | V-0 | NR | NR | NR | NR |
| Flame Retardancy after Water Immersion | NR | NR | NR | NR | NR |

**[Table 5]**

| | Comparative Example 6 | Comparative Example 7 | Comparative Example 8 | Comparative Example 9 |
|---|---|---|---|---|
| Polypropylene Composition 1 | 79.6 | 79.3 | 78.8 | 77.8 |
| (A) Melamine Salt | 7.6 | 7.6 | 7.6 | 7.6 |
| (B) Piperazine Salt | 11.4 | 11.4 | 11.4 | 11.4 |
| (C) Epoxy Compound 1 | - | - | - | - |
| (C) Epoxy Compound 2 | - | - | - | - |
| (C) Epoxy Compound 3 | - | - | - | - |
| (C) Epoxy Compound 4 | - | - | - | - |
| Comparison of (C): Epoxy Compound 5 | - | - | - | - |
| Comparison of (C): Epoxy Compound 6 | 0.2 | 0.5 | 1 | 2 |
| (D) Flame Retardant Aid | 1 | 1 | 1 | 1 |
| (D) Anti-drip Agent | 0.2 | 0.2 | 0.2 | 0.2 |
| Water resistance (µS/cm) | 110 | 86 | 61 | 50 |
| Flame Retardancy | NR | NR | NR | NR |
| Flame Retardancy after Water Immersion | NR | NR | NR | NR |

**[Table 6]**

| | Example 17 | Example 18 | Example 19 | Example 20 | Example 21 |
|---|---|---|---|---|---|
| Polypropylene Composition 2 | 71.8 | 71 | 70 | 71.8 | 71 |
| (A) Melamine Salt | 11.2 | 11.2 | 11.2 | 11.2 | 11.2 |
| (B) Piperazine Salt | 16.8 | 16.8 | 16.8 | 16.8 | 16.8 |
| (C) Epoxy Compound 1 | 0.2 | 1 | 2 | - | - |
| (C) Epoxy Compound 2 | - | - | - | 0.2 | 1 |
| (C) Epoxy Compound 3 | - | - | - | - | - |
| (C) Epoxy Compound 4 | - | - | - | - | - |
| Comparison of (C): Epoxy Compound 5 | - | - | - | - | - |
| Comparison of (C): Epoxy Compound 6 | - | - | - | - | - |
| (D) Flame Retardant Aid | - | - | - | - | - |
| (D) Anti-drip Agent | - | - | - | - | - |
| Water resistance (µS/cm) | 268 | 211 | 178 | 265 | 224 |
| Flame Retardancy | V-0 | V-0 | V-0 | V-0 | V-0 |
| Flame Retardancy after Water Immersion | V-0 | V-0 | V-0 | V-0 | V-0 |

**[Table 7]**

| | Example 22 | Example 23 | Example 24 | Example 25 | Example 26 |
|---|---|---|---|---|---|
| Polypropylene Composition 2 | 70 | 71.8 | 71 | 70 | 71.8 |
| (A) Melamine Salt | 11.2 | 11.2 | 11,2 | 11.2 | 11.2 |
| (B) Piperazine Salt | 16.8 | 16.8 | 16.8 | 16.8 | 16.8 |
| (C) Epoxy Compound 1 | - | - | - | - | - |
| (C) Epoxy Compound 2 | 2 | - | - | - | - |
| (C) Epoxy Compound 3 | - | 0.2 | 1 | 2 | - |
| (C) Epoxy Compound 4 | - | - | - | - | 0.2 |
| Comparison of (C): Epoxy Compound 5 | - | - | - | - | - |
| Comparison of (C): Epoxy Compound 6 | - | - | - | - | - |
| (D) Flame Retardant Aid | - | - | - | - | - |
| (D) Anti-drip Agent | - | - | - | - | - |
| Water resistance (µS/cm) | 186 | 264 | 211 | 180 | 255 |
| Flame Retardancy | V-0 | V-0 | V-0 | V-0 | V-0 |
| Flame Retardancy after Water Immersion | V-0 | V-0 | V-0 | V-0 | V-0 |

**[Table 8]**

| | Example 27 | Example 28 | Example 29 | Example 30 |
|---|---|---|---|---|
| Polypropylene Composition 2 | 71 | 70 | 71 | 71 |
| (A) Melamine Salt | 11.2 | 11.2 | 8.4 | 14.0 |
| (B) Piperazine Salt | 16.8 | 16.8 | 19.6 | 14.0 |
| (C) Epoxy Compound 1 | - | - | 1 | 1 |
| (C) Epoxy Compound 2 | - | - | 0 | - |
| (C) Epoxy Compound 3 | - | - | - | - |
| (C) Epoxy Compound 4 | 1 | 2 | - | - |
| Comparison of (C): Epoxy Compound 5 | - | - | - | - |
| Comparison of (C): Epoxy Compound 6 | - | - | - | - |
| (D) Flame Retardant Aid | - | - | - | - |
| (D) Anti-drip Agent | - | - | - | - |
| Water resistance (µS/cm) | 187 | 170 | 246 | 174 |
| Flame Retardancy | V-0 | V-0 | V-0 | V-0 |
| Flame Retardancy after Water Immersion | V-0 | V-0 | V-0 | V-0 |

**[Table 9]**

| | Comparative Example 10 | Comparative Example 11 | Comparative Example 12 | Comparative Example 13 | Comparative Example 14 |
|---|---|---|---|---|---|
| Polypropylene Composition 2 | 72 | 71.8 | 71 | 70 | 71.8 |
| (A) Melamine Salt | 11.2 | 11.2 | 11.2 | 11.2 | 11.2 |
| (B) Piperazine Salt | 16.8 | 16.8 | 16.8 | 16.8 | 16.8 |
| (C) Epoxy Compound 1 | - | - | - | - | - |
| (C) Epoxy Compound 2 | - | - | - | - | - |
| (C) Epoxy Compound 3 | - | - | - | - | - |
| (C) Epoxy Compound 4 | - | - | - | - | - |
| Comparison of (C): Epoxy Compound 5 | - | 0.2 | 1 | 2 | - |
| Comparison of (C): Epoxy Compound 6 | - | - | - | - | 0.2 |
| (D) Flame Retardant Aid | - | - | - | - | - |
| (D) Anti-drip Agent | - | - | - | - | - |
| Water resistance (µS/cm) | 313 | 174 | 150 | 138 | 188 |
| Flame Retardancy | V-0 | NR | NR | NR | NR |
| Flame Retardancy after Water Immersion | V-2 | NR | NR | NR | NR |

**[Table 10]**

| | Comparative Example 15 | Comparative Example 16 | Comparative Example 17 | Comparative Example 18 |
|---|---|---|---|---|
| Polypropylene Composition 2 | 71 | 70 | 72 | 72 |
| (A) Melamine Salt | 11.2 | 11.2 | 8.4 | 14.0 |
| (B) Piperazine Salt | 16.8 | 16.8 | 19.6 | 14.0 |
| (C) Epoxy Compound 1 | - | - | - | - |
| (C) Epoxy Compound 2 | - | - | - | - |
| (C) Epoxy Compound 3 | - | - | - | - |
| (C) Epoxy Compound 4 | - | - | - | - |
| Comparison of (C): Epoxy Compound 5 | - | - | - | - |
| Comparison of (C): Epoxy Compound 6 | 1 | 2 | - | - |
| (D) Flame Retardant Aid | - | - | - | - |
| (D) Anti-drip Agent | - | - | - | - |
| Water resistance (µS/cm) | 156 | 140 | 370 | 282 |
| Flame Retardancy | NR | NR | V-0 | V-0 |
| Flame Retardancy after Water Immersion | NR | NR | V-2 | V-2 |

**[Table 11]**

| | Example 31 | Example 32 | Example 33 | Example 34 | Example 35 | Example 36 |
|---|---|---|---|---|---|---|
| Polypropylene Composition 1 | 79.6 | 79.3 | 78.8 | 77.8 | 79.6 | 79.3 |
| (A) Melamine Salt | 7.6 | 7.6 | 7.6 | 7.6 | 7.6 | 7.6 |
| (B) Piperazine Salt | 11.4 | 11.4 | 11.4 | 11.4 | 11.4 | 11.4 |
| (C) Epoxy Compound 1 | 0.2 | 0.5 | 1 | 2 | - | - |
| (C) Epoxy Compound 2 | - | - | - | - | 0.2 | 0.5 |
| (C) Epoxy Compound 3 | - | - | - | - | - | - |
| (C) Epoxy Compound 4 | - | - | - | - | - | - |
| Comparison of (C): Epoxy Compound 5 | - | - | - | - | - | - |
| Comparison of (C): Epoxy Compound 6 | - | - | - | - | - | - |
| (D) Flame Retardant Aid | 1 | 1 | 1 | 1 | 1 | 1 |
| (D) Anti-drip Agent | 0.2 | 0.2 | 0.2 | 0.2 | 0.2 | 0.2 |
| Water resistance (µS/cm) | 59 | 57 | 50 | 55 | 60 | 58 |
| Flame Retardancy | V-0 | V-0 | V-0 | V-0 | V-0 | V-0 |
| Flame Retardancy after Water Immersion | V-0 | V-0 | V-0 | V-0 | V-0 | V-0 |

**[Table 12]**

| | Example 37 | Example 38 | Example 39 | Example 40 | Example 41 |
|---|---|---|---|---|---|
| Polypropylene Composition 1 | 78.8 | 77.8 | 79.6 | 79.3 | 78.8 |
| (A) Melamine Salt | 7.6 | 7.6 | 7.6 | 7.6 | 7.6 |
| (B) Piperazine Salt | 11.4 | 11.4 | 11.4 | 11.4 | 11.4 |
| (C) Epoxy Compound 1 | - | - | - | - | - |
| (C) Epoxy Compound 2 | 1 | 2 | - | - | - |
| (C) Epoxy Compound 3 | - | - | 0.2 | 0.5 | 1 |
| (C) Epoxy Compound 4 | - | - | - | - | - |
| Comparison of (C): Epoxy Compound 5 | - | - | - | - | - |
| Comparison of (C): Epoxy Compound 6 | - | - | - | - | - |
| (D) Flame Retardant Aid | 1 | 1 | 1 | 1 | 1 |
| (D) Anti-drip Agent | 0.2 | 0.2 | 0.2 | 0.2 | 0.2 |
| Water resistance (µS/cm) | 54 | 56 | 65 | 60 | 53 |
| Flame Retardancy | V-0 | V-0 | V-0 | V-0 | V-0 |
| Flame Retardancy after Water Immersion | V-0 | V-0 | V-0 | V-0 | V-0 |

**[Table 13]**

| | Example 42 | Example 43 | Example 44 | Example 45 | Example 46 |
|---|---|---|---|---|---|
| Polypropylene Composition 1 | 77.8 | 79.6 | 79.3 | 78.8 | 77.8 |
| (A) Melamine Salt | 7.6 | 7.6 | 7.6 | 7.6 | 7.6 |
| (B) Piperazine Salt | 11.4 | 11.4 | 11.4 | 11.4 | 11.4 |
| (C) Epoxy Compound 1 | - | - | - | - | |
| (C) Epoxy Compound 2 | - | - | - | - | - |
| (C) Epoxy Compound 3 | 2 | - | - | - | - |
| (C) Epoxy Compound 4 | - | 0.2 | 0.5 | 1 | 2 |
| Comparison of (C): Epoxy Compound 5 | - | - | - | - | - |
| Comparison of (C): Epoxy Compound 6 | - | - | - | - | - |
| (D) Flame Retardant Aid | 1 | 1 | 1 | 1 | 1 |
| (D) Anti-drip Agent | 0.2 | 0.2 | 0.2 | 0.2 | 0.2 |
| Water resistance (µS/cm) | 57 | 53 | 49 | 45 | 46 |
| Flame Retardancy | V-0 | V-0 | V-0 | V-0 | V-0 |
| Flame Retardancy after Water Immersion | V-0 | V-0 | V-0 | V-0 | V-0 |

The component compositions of Examples 1 to 16 led to an electrical conductivity of water in the water resistance test which was lower than that in Comparative Example 1, and the component compositions of Examples 17 to 30 led to an electrical conductivity of water in the water resistance test which was lower than those in Comparative Examples 10, 17 and 18. The above results revealed that the water resistance was improved by employing the component composition in which the flame retardant composition according to the present invention is used.

Further, the component compositions of Examples 1 to 46 did not lead to a decrease in the combustion rank after the water immersion, and an excellent flame-retardant performance was maintained. In contrast, the component compositions of Comparative Examples 1, 10, 17 and 18 led to a decrease in the combustion rank after the water immersion. Further, the component compositions of Comparative Examples 2 to 9 and 11 to 16 led to a poor flame retardancy in a state not immersed in water.

The above results showed that the flame retardant composition according to the present invention has an excellent water resistance and flame retardancy, and the resin composition incorporating the flame retardant composition according to the present invention has a lower degree of decrease in the flame retardant performance after contact with water.

## Claims

1. A flame retardant composition comprising the following component (A), component (B) and component (C), wherein:
the component (A) is one or more melamine salts selected from the group consisting of melamine orthophosphate, melamine pyrophosphate and melamine polyphosphate;
the component (B) is one or more piperazine salts selected from the group consisting of piperazine orthophosphate, piperazine pyrophosphate and piperazine polyphosphate; and
the component (C) is an epoxy compound having a molecular weight or a number average molecular weight of from 300 to 10,000.

2. The flame retardant composition according to claim 1, wherein the flame retardant composition comprises from 20 to 50 parts by mass of the component (A), from 50 to 80 parts by mass of the component (B) and from 0.1 to 15 parts by mass of the component (C), with respect to 100 parts by mass of the total amount of the component (A) and the component (B).

3. The flame retardant composition according to claim 2, wherein the component (C) is one or more selected from the group consisting of a bifunctional phenol diglycidyl ether, an alicyclic ring-containing multifunctional epoxy compound, and an epoxidized animal or vegetable oil.

4. The flame retardant composition according to claim 2, wherein the component (C) has an epoxy equivalent of from 100 to 1,200 g/eq.

5. The flame retardant composition according to claim 2, wherein at least one of the component (A) and the component (B) is surface treated with the component (C).

6. The flame retardant composition according to claim 2, wherein the component (B) is piperazine pyrophosphate.

7. The flame retardant composition according to claim 2, further comprising, as a component (D), from 0.1 to 10 parts by mass of at least one selected from the group consisting of a flame retardant aid and an anti-drip agent, with respect to 100 parts by mass of the total amount of the component (A) and the component (B).

8. A flame-retardant resin composition, comprising:
a thermoplastic resin; and
from 10 to 400 parts by mass of the flame retardant composition according to any one of claims 1 to 7, with respect to 100 parts by mass of the thermoplastic resin.

9. A molded article using the flame-retardant resin composition according to claim 8.
